# EUROPEAN PATENT APPLICATION

(11) **EP 0 993 166 A1**
(43) Date of publication of application: **12.04.2000**
(21) Application number: 98402495.0
(22) Date of filing: 07.10.1998
(51) Int. Cl.: H04M 1/65

(54) **Answering machine for an analog telecommunication system**

(71) Applicant: ALCATEL, 75008 Paris (FR)
(72) Inventor: Loeillet, Patrick, 67200 Strasbourg (FR)
(74) Representative: Rausch, Gabriele, Dr.

(57) **Abstract**

An answering machine (AM) for an analog telecommunication system is disclosed which ensures a high degree of privacy and confidentiality in cases when more than one user has access to the answering machine. According to the invention, the answering machine comprises at least two distinct mail boxes (MB1, MB2,..., MBn) for storing messages from calling parties. Detection means (DET) detect a called party identification signal after a wake-up signal has been received by the answer machine. This signal denotes a specific party that has access to the answering machine. Comparing means (COMP) compare the detected called party identification signal with at least two predefined signals, each of the two predefined signals being assigned to one of the at least two mail boxes. Switching means (SWI) connect the analog telephone line to one of the at least two mail boxes depending on the result yielded by the comparing means.

## Description

The invention relates to an answering machine for an analog telecommunication system.

### Background of the invention

In conventional analog telecommunication systems, no information regarding who is calling is transmitted to a called party. Recently however, analog telecommunication systems have been improved by adding special features that were previously only available in digital telecommunication systems.

US Patent No. 4,582,956 discloses a method of displaying special service information during silent intervals between ringing. Responsive to the detection of a special unmodulated signal, the telephone set of a called party receives a modulated signal containing the special service information. Preferrably this special service information relates to the calling party. The telephone set of a called party may display the number of the calling party. It may even display the name of the calling party, if the telephone set comprises a memory in which telephone numbers are associated with names.

This kind of feature has been named 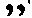 Caller ID" and is subject of European Telecommunication Standards ETS 300 659-1, published in February 1997, and ETS 300659-2, published in September 1997, both issued by the European Telecommunication Standards Institute (ETSI). These standards describe a subscriber line protocol over local loop which enable called parties to identify who is calling.

### Problem to be solved

In many households or small companies, a plurality of telephones is physically connected to a single analog telephone line. At a given time, only one telephone set can communicate via this analog telephone line. For that reason, there is usually only one answering machine, if any. If there were more than one answering machine, all these would record simultaneously incoming messages, which is not very useful. It is the object of the invention to provide an answering machine that improves privacy and confidentiality in such circumstances. An answering machine that solves this problem is defined in claim 1.

### Summary of the invention

According to the invention, the answering machine comprises at least two distinct mail boxes for storing messages from calling parties, detection means for detecting a called party identification signal, this called party identification signal arriving via said analog telephone line after a wake-up signal has been received by the answer machine, comparing means for comparing the detected called party identification signal with at least two predefined signals, and switching means for establishing a connecting between said analog telephone line and one of the at least two mail boxes depending on the result yielded by the comparing means.

According to the invention, the called party identification signal denotes a specific party that has access to the answering machine. Imagine, for example, a family with parents, a grown-up daughter and a young boy. The family as a whole has only access to a single analog telephone line. According to the invention, to each member of the family a specific telephone number is assigned. If the daughter's boy friend wants to leave a voice message to her, he dials the telephone number of the daughter. The invention then ensures that the message is stored in a mail box which is solely dedicated to the daughter. Voice messages that are addressed to her father will be routed to his personal mail box. Voice messages that are addressed to her mother will be routed to her personal mail box, etc. This allows a much higher degree of privacy than conventional answering machines, because each member of the family will only listen to those messages which are addressed to this particular member.

According to an advantageous embodiment of claim 2, the answering machine further comprises input means for entering a personal identification, safety means for checking if the entered personal identification corresponds to one of at least two personal identifications that are stored in a memory of the machine, and access means which give the user access to one of the at least two mail boxes depending on the personal identification the user has entered. These features improve the degree of confidentiality even more because they prevent that a member of the family listens unintentionally to messages that are stored in a mail box that is not dedicated to this particular member. Only the member that has the correct personal identification is able to access the contents of the corresponding mail box. The personal identification may, for example, be a personal identification number (PIN), a password or the voice of the member.

The invention will be explained in more detail with reference to the following figures, of which
Fig. 1 shows a schematic diagram of a first embodiment according to claim 1;
Fig. 2 shows a schematic diagram of a second embodiment according to claim 2.

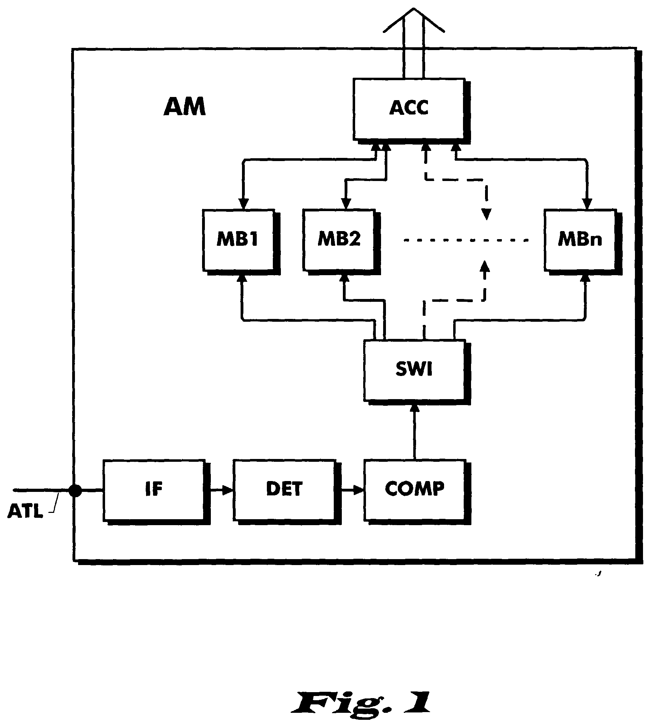

Fig. 1 shows to the left an analog telephone line ATL that is physically connected to an interface IF of the answering machine AM. Before a communication connection is established, a local exchange transmits a wake-up signal to the answer machine via the analog line. The form of this wake-up signal depends on the network and may, for example, be a short ring, a specific ring pattern or a change of the polarity of the line voltage. After this wake-up signal a called party identification signal is transmitted via the analog line. A signal detector DET isolates the called party identification signal from other signals that may have also been received after the wake-up signal, e. g. a caller ID signal. The latter is described in detail in the European Telecommunication Standards mentioned above. The isolated called party identification signal is conveyed to a comparison unit COMP that compares the called party identification signal with a plurality of predefined signals. If the called party identification signal matches one of the predefined signals, the analog telephone line is connected via a switch SWI to one of a plurality of distinct mail boxes MB1, MB2..., MBn. The voice message is then recorded in the selected mail box in a conventional manner. Since there is a one to one correspondence between each mail box and the predefined signals, a calling party can selectively choose a mail box to which a message shall be routed by dialing the telephone number of the person that has access to this mail box. Preferentially, the telephone number is translated by a local exchange into a called party identification signal. Thus, although only one analog telephone line is available, a plurality of mail boxes can selectively be addressed by a calling party.

If messages are to be retrieved from one of the mail boxes, the user may simply enter a number that is assigned to the mail box in whose contents he is interested. This request is communicated to access means ACC. The access means ACC provide a connection between the mail box and output means, e. g. a loudspeaker. With respect to other functionalities (e. g. that the answering machine starts only if nobody receives the call personally), the answering machine of the present invention is not substantially different from conventional ones. The same also applies to the man-machine-interface. All known solutions for such an interface (LCD screen, monitor, voice recognition etc.) are suitable in this respect. For example, an LCD screen could indicate for each mail box who has called at which time of the day.

In the Fig. 1 embodiment, the different elements as described above are realized as distinct hardware circuits. It should, however, be noted that the term 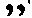 analog telecommunication system" does not exclude the presence of digital parts inside said system or the answering machine; it merely states that the said telephone lines are analog ones.

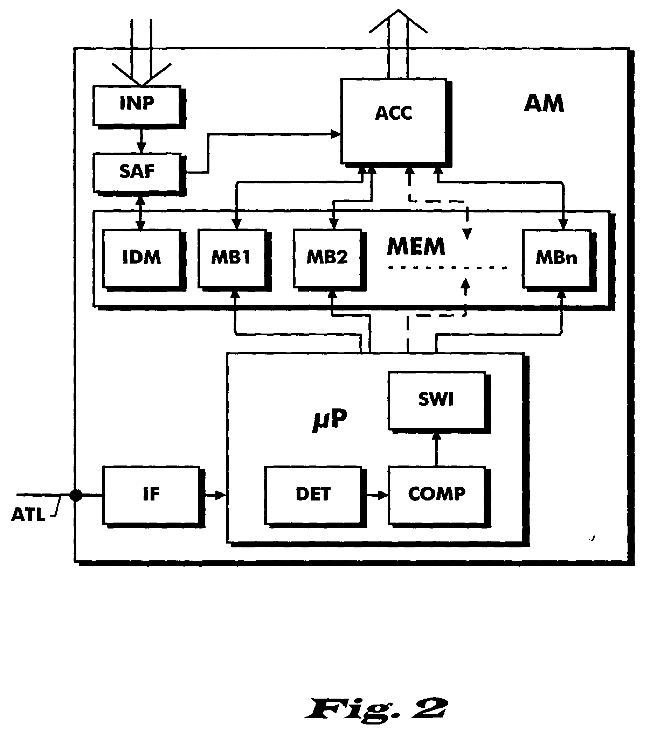

Another particularly advantageous embodiment of the invention is shown in Fig. 2. The signal detector DET, the comparison unit COMP and the switch SWI are software modules that are stored in a memory and may be run by a central processing unit µP. In the memory MEM, e. g. a flash memory or a hard disk, the mail boxes MB1, MB2, ..., MBn are mapped as distinct address areas. The answering machine AM is provided with input means INP for entering a personal identification, e. g. a keyboard, a card reader or a voice recognition circuit. Safety means SAF are provided for checking if the entered personal identification corresponds to one of at least two personal identification that are stored in a part IDM of the memory MEM and are assigned to specific mail boxes. In this embodiment, the access means ACC give access to a specific mail box only if the personal identification corresponds to this mail box. Users that do not possess the correct personal identification are not able to retrieve its contents. This allows to have a degree of privacy and confidentiality that has heretofore been unknown in analog telecommunication systems.

It is obvious that an answering machine as described hereinabove may be realized as a stand-alone machine but equally advantageously as being part of a telephone set, a fax machine or a Personal Computer telephone card. In all cases the invention ensures that messages addressed to a particular person are not mixed with messages addressed to other persons.

## Claims

1. Answering machine (AM) for an analog telecommunication system, the machine having an interface (IF) to which an analog telephone line (ATL) is physically connectable,
**characterized in that** the answering machine comprises
a) at least two distinct mail boxes (MB1, MB2,..., MBn) for storing voice messages from calling parties,
b) detection means (DET) for detecting a called party identification signal, this called party identification signal arriving via said analog telephone line after a wake-up signal has been received by the answer machine,
c) comparing means (COMP) for comparing the detected called party identification signal with at least two predefined signals, each of the two predefined signals being assigned to one of the at least two mail boxes,
d) switching means (SWI) for establishing a connecting between said analog telephone line and one of the at least two mail boxes depending on the result yielded by the comparing means.

2. Answering machine (AM in Fig. 2) according to claim 1, further comprising
a) input means (INP) for entering a personal identification,
b) safety means (SAF) for checking if the entered personal identification corresponds to one of at least two personal identifications that are stored in a memory of the answering machine,
c) access means (ACC) which give the user access to one of the at least mail boxes depending on the personal identification the user has entered.

3. Answering machine according to claim 1 in which said called party identification signal forms part of a signaling signal being a so-called caller identification signal.

4. Telephone set comprising an answering machine according to one of the preceding claims.

5. Fax machine comprising an answering machine according to one of the claims 1 or 3.

6. PC telephone card comprising an answering machine according to one of the claims 1 or 3.
